## Europäisches Patentamt

## European Patent Office

## Office européen des brevets

(19)

(11) Veröffentlichungsnummer : **0 502 857 B1**

(12) **EUROPÄISCHE PATENTSCHRIFT**

(45) Veröffentlichungstag der Patentschrift :
**06.04.94 Patentblatt 94/14**

(51) Int. Cl.[5] : **G06F 9/40**

(21) Anmeldenummer : **90916206.7**

(22) Anmeldetag : **24.10.90**

(86) Internationale Anmeldenummer :
**PCT/EP90/01804**

(87) Internationale Veröffentlichungsnummer :
**WO 91/08534 13.06.91 Gazette 91/13**

(54) **VERFAHREN ZUR DYNAMISCHEN BINDUNG VON DEFINIERBAREN PROGRAMMELEMENTEN EINES INTERAKTIVEN DATENVERARBEITUNGSSYSTEMS.**

(30) Priorität : **29.11.89 EP 89121992**

(43) Veröffentlichungstag der Anmeldung :
**16.09.92 Patentblatt 92/38**

(45) Bekanntmachung des Hinweises auf die
Patenterteilung :
**06.04.94 Patentblatt 94/14**

(84) Benannte Vertragsstaaten :
**DE FR GB**

(56) Entgegenhaltungen :
**Proceedings OOPSLA '89, 1-6. Oktober
1989,ACM, (New Orleans, US), J.A. Marques
etal.: "Extending the operating system to support an object- oriented environment"
IBM Technical Disclosure Bulletin, Band 16,
Nr. 1,Juni 1973,J.P.Benkard et al.: "Automatic
descriptor decoding",**

(73) Patentinhaber : **SIEMENS
AKTIENGESELLSCHAFT
Wittelsbacherplatz 2
D-80333 München (DE)**

(72) Erfinder : **FLUG, Christian
Radolfzellerstrasse 7
D-8000 München 60 (DE)**
Erfinder : **KOLB, Dieter
Waldkornstrasse 65
D-8034 Germering (DE)**

EP 0 502 857 B1

## Beschreibung

Verfahren zur dynamischen Bindung von definierbaren Programmelementen eines interaktiven Datenverarbeitungssystems

Ein derartiges Verfahren wird insbesondere bei interaktiven Entwicklungsumgebungen verwendet. Derzeit gibt es ein breites Gebiet von interaktiven Systemen zur kommerziellen Anwendung, welche von sehr teueren Großrechnern bis zu kleinen PC's reichen. Das Programmsystem LISP (List Processing) ist beispielsweise eines von den vielen derzeit bekannten derartigen Systemen. Beispielsweise an der Carnegie-Mellon-University (CMU) wurde im Jahre 1985 an einem von der Perq. Systems Corporation hergestellten Rechner das sog. "Spice LISP" als eine Variante des "Common LISP" implementiert. Die Autoren David B. Mc Donald, Scott E. Fahlmann und Skef Wholey beschreiben unter dem Titel "Internal Design of CMU Common Lisp on the IBM RT PC", Sept. 1987, CMU-CS-87-157, die genauen Details für eine Implementierung von "Common LISP" in einem Mach-Betriebssystem, welches mit Berkeley Unix 4.3 kompatibel ist. Insbesondere beginnend mit Seite 35 wird festgehalten, daß bei Funktionsaufrufen eine große Zahl von Abfrageoperationen erforderlich ist zur Bestimmung des aktuellen Zustandes der aufgerufenen Funktion. Dabei sind inline-Abläufe vorgesehen zum sog. Evaluieren der Argumente. Danach sind sog. out-of-line-Abläufe vorgesehen, welche als ein zentrales Funktionsaufruf-Programm realisiert sind, mit unterschiedlichen Programmteilen für eine compilierte Funktion und eine zu interpretierende Liste. Wenn die aufgerufene Funktion durch ein Symbol darstellbar ist, kann eine Verbindungstabelle verwendet werden, welche aus Doppelworten aufgebaut ist, und anfangs zum zentralen Funktionsaufruf-Programm verweist, welches fallweise einen Verweis zum Funktionsprogramm einträgt.

Von den Autoren José Alves Marques und Paulo Guldes wird unter dem Titel "Extending the Operating System to Support an Object-Oriented Environment" in den Proceedings of Object-Oriented Programming: Systems, Languages and Applications (OOPSLA' 89), ACM, 1. bis 6. Oktober 1989, New Orleans, LA, USA, auf den Seiten 113 bis 122 eine Betriebssystemplattform beschrieben, welche basierend auf einer virtuellen Maschine vorgesehen ist. Objekte sind in ihren Objektklassen klassifizierbar aufgrund von Typdefinitionen des Anwenders, bestehend aus Operationen und Eigenschaften. Die Objekte sind referenzierbar als aktive oder passive Objekte, indem jedem Objekt, welches dem System bekannt gemacht wird, je ein eigener Identifier zugeteilt wird, sodaß Objekte uniformiert und transparent aufrufbar sind. Zugriffstransparenz unabhängig von einer Residenz in einem Massenspeicher oder einem Arbeitsspeicher ermöglicht es einem Ablaufsystem, daß Objekt-Fehlzugriffe erkennbar und eine dynamische Bindung verfügbar ist. Durch Synchronisierungsregeln für ein synchronisierbares Objekt erfolgt bei konkurenzierenden Zugriffen eine Synchronisierung. Eine Fehlertransparenz des Systems ist vorgesehen, indem ein Fehler-Containment definierbar ist für atomare Objekte. Es ist eine virtuelle Architektur vorgesehen, bei welcher Managementbereiche (domains) definierbar sind. Der Adreßraum wird eingeteilt einerseits in einen virtuellen Objektspeicher für Aufrufe und Instanzierung von Objekten bei der Ausführung eines Jobs, sowie andererseits ein Speicherungssystem für Objekte außerhalb der Ausführung von Jobs. Operationen für Objekte werden identifiziert anhand einer Methoden-Identifizierung, mittels welcher aus einer Methodentabelle eine virtuelle Adresse für die Operation entnehmbar ist, welche als zugewiesene Methode der Operation zugeordnet ist. Bei der dynamischen Bindung erfolgt für die referenzierte Methode der Verweis auf den zugehörigen Eintrag in der Methoden-Tabelle. Die Objekt-Struktur wird gebildet einerseits durch Daten-Objekte, welche Instanzierungsdaten enthalten, sowie andererseits durch Implementierungs-Objekte, welche den Ablaufcode für alle Objekte eines bestimmten Implementierungstyps enthalten. Es wird ein Datenblock als Informationskopf verwendet, in welchem zu einem Objekt eingetragen ist, was bei einem Speichern, bei einem Aufrufen, sowie bei einem Zugriffsschutz für ein Objekt an Informationen für das System erforderlich ist. Bei einem Aufruf eines Objektes wird eine Objekt-Referenz, eine Operation-Identifizierung sowie eine Parameterliste von der aufrufenden Aktivität aufbereitet für einen Systemaufruf. Bei einem remote gespeicherten Objekt wird die Aktivität verteilt auf den remoten Systemknoten, in welchem das remote Objekt gespeichert ist. Bei der Suche nach dem Objekt wird zunächst eine Context-Objekt-Tabelle durchsucht, in welcher die Informationsköpfe referenziert sind für die Objekte, welche zum Job-Context zugehörig sind. Bei einem Implementierungs-Objekt wird mittels einer Knoten-Objekt-Tabelle versucht, das gesuchte Objekt im eigenen Knoten etwa in einem anderen Job-Context aufzufinden. Bei einem Daten-Objekt wird unterschieden zwischen unsynchronisierbaren, synchronisierbaren und automaren Objekten, indem insbesondere bei mehreren Kopien für ein unsynchronisierbares Objekt eine Objektspeicherungs-Tabelle zu überprüfen ist.

Von den Autoren J.P.Benkard und J.P.Gelb wird unter dem Titel "Automatic descriptor decoding" im IBM Technical Disclosure Bulletin, Band 16, Nr. 1, Juni 1973, auf den Seiten 180 bis 182 eine Methode beschrieben, bei welcher eine Instruktion decodiert wird, von welcher Daten verwendet werden, welche mittels eines Datendescriptors zu interpretieren sind. Bei einem Ablauf soll der Daten-Descriptor geändert werden können,

EP 0 502 857 B1

sodaß dieser beim Decodieren der Instruktion stets erneut zu interpretieren ist. Als Beispiel ist eine Addition angegeben, bei welcher stufenweise die Operanden untersucht werden, ob beispielsweise eine Konvertierung von einem Festkommaformat zu einem Gleitkommaformat erforderlich ist. Bei der Entscheidung werden mehrere tabellenartige Filter verwendet, deren Tabelleneinträge die auszuführende Behandlung für die zu verwendenden Daten bestimmen, insbesondere Übereinstimmungstests, Aufbereitungen, Typüberprüfungen sowie Konvertierungen.

Die Aufgabe der Erfindung besteht darin, daß ein weiteres Verfahren angegeben wird zur dynamischen Bindung von Programmelementen eines interaktiven Systems.

Diese Aufgabe wird gelöst durch ein Verfahren zur dynamischen Bindung von Programmelementen eines interaktiven Datenverarbeitungssystems, bei welchem durch die Programmelemente-Abläufe des interaktiven Datenverarbeitungssystems definierbar sind, mit folgenden Merkmalen:

a) Jedem Programmelement wird ein Bindungskopf als ein Datenblock zur Aufnahme von Kettungsinformationen zugeordnet, sodaß ein jeweils aktueller Zustand von einer Definition des Programmelementes durch die Kettungsinformation als ein dynamisch gebundener Ablauf ermittelbar ist,

b) An den Bindungskopf wird ein Ablaufcode des Programmelementes gekettet, der dem aktuellen Zustand des Programmelementes entspricht.

c) Bei jeder Änderung der Definition des Programmelementes wird ein neuer Bindungskopf erzeugt mit einem der neuen Definition entsprechenden Ablaufcode, welcher an den Bindungskopf gekettet wird.

d) Wenn ein Programmelement verwendet wird, dann wird über den zugeordneten Bindungskopf auf den geketteten Ablaufcode zugegriffen und der Ablaufcode ausgeführt.

Der Erfindung liegt die Erkenntnis zugrunde, daß Zustandsabfragen nicht erforderlich sind, wenn mittels Zugriff auf eine Datenstruktur jener Ablaufcode unmittelbar zum Ablauf kommt, welcher einem jeweils aktuellen Zustand einer interaktiv festlegbaren Definition für das Programmelement entspricht.

Das erfindungsgemäße Verfahren ist dabei eine Hardware-unabhängige Software-Lösung. In besonders vorteilhafter Weise ist dadurch dieses Verfahren unabhängig vom Typ der Datenverarbeitungsanlage, und es ist deshalb für nahezu jedes interaktive System einsetzbar, wie beispielsweise Programmiersysteme für Prolog, Rapid Prototyping, Objekt-orientierte Systeme und insbesondere Lisp-Systeme. Ebenso ist ein Hardware-unabhängiges Datenrepräsentationsmodell für die Bindungsköpfe und die geketteten Ablaufcode-Vektoren in besonders vorteilhafterweise erzielbar. Da die dynamische Bindung von Programelementen bei interaktiven Systemen besonders häufig auftritt, ist durch den Wegfall der häufig sehr aufwendigen Zustandsabfrageoperationen in vorteilhafter Weise eine Reduzierung der Programmlaufzeit für interaktive Entwicklungssysteme erzielbar. Ebenso ist in vorteilhafterweise-eine Reduzierung der Laufzeit für Applikationen mit dynamischer Bindung beispielsweise im Bereich des Objektorientierten Programmierens erzielbar.

Für alle nicht definierten oder noch nicht definierten Programmelemente kann ein gemeinsamer Bindungskopf angekettet sein mit einem Ablaufcode für eine Default-Routine. So kann die Verwendung derartiger Programmelemente in einer einheitlichen Weise erfolgen, wie bei den zum Ablaufzeitpunkt bereits definierten Programmelementen, so daß zur Laufzeit keine Abfragen über den aktuellen Zustand der Definition des Programmelementes erforderlich sind. Ein Verweis als Kettung kann dabei in der Weise erfolgen, daß beispielsweise eine direkte Adresse des Speichers eingetragen wird oder daß beispielsweise ein Zeiger für eine verdeckte Adressierung benutzt wird, oder daß beispielsweise ein Verweis in Form einer Verschlüsselung eingetragen wird, so daß mittels eines Decodierungsverfahrens die Adressierung ermittelbar ist.

Bei bisherigen bekannten Systemen, beispielsweise bei dem in der genannten Druckschrift beschriebenen und eingangs erwähnten "CMU-Common-LISP", wird für die nicht definierten Funktionen stets der zentrale Funktionsaufrufer mit seinen zahlreichen Zustandsabfrageoperationen etwa über eine Bindungstabelle aufgerufen, während bei dem erfindungsgemäßen Verfahren ein direkter Übergang zum Ablaufcooe für beispielsweise die Fehlerbehandlung ausführbar ist, sodaß Zustandsabfrageoperationen nicht erforderlich sind.

Häufige Anwendungsfälle ergeben sich beispielsweise bei Prozeduren, Methooen, Funktionen. Durch die Verwendung des Binaungskopfes kann die häufig aufwendige Abfrage-Routine betreffend des Zustandes der Definition entfallen. Beispielsweise bei einer Compilierung sind zur Verwenoung von derartigen Programmelementen nur wenige Ablaufinstruktionen zu expandieren für einen Zugriff auf die Datenstruktur des Programmelementes, sodaß diese Ablaufinstruktionen dezentral assemblierbar sind, was häufig auch mit "in-line" bezeichnet wird. Der Aufruf eines größeren zentralen Programmteiles, zur dynamischen Bindung kann im Gegensatz zu bisherigen interaktiven Programmsystemen entfallen. Dieser zentrale Programmteil wird bei bisherigen interaktiven Systemen beispielsweise über eine Bindungstabelle beim ersten Aufruf einer bereits compilierten Funktion angesprochen, wie dies eingangs erwähnt wurde. Bei vielen anderen bisherigen Anwendungen ist ständig ein direkter Aufruf eines zentralen Programmteils vorgesehen. Viele weitere bisherige Anwendungen verwenden beispielsweise einen ungültigen Befehlscode, sodaß eine Hardware-Routine ausgelöst wird, durch welche der zentrale Programmteil schließlich erreicht wird. Diese wird häufig als "Trap-Routine"

3

EP 0 502 857 B1

bezeichnet.

Unabhängig vom jeweiligen aktuellen Zustand der Definition der Programmelemente kann der jeweils zugehörige Bindungskopf stets in einer gleichen Weise verwendet werden zur dynamischen Bindung beispielsweise für sog. lokal-definierbare Programmelemente, für welche der Bindungskopf jeweils lokal verwendet werden kann.

Eine bevorzugte Ausführungsform der Erfindung ist dadurch gekennzeichnet, daß zur leichteren Auffindung des Bindungskopfes das Programmelement.einen auf den Bindungskopf verweisenden Identifizierungseintrag erhält. Insbesondere auch für global definierbare Programmelemente ist dadurch der zugehörige Bindungskopf erleichtert auffindbar. Beispielsweise für Sprachelemente, welche durch ein globales Symbol identifizierbar sind, ist dies vorteilhaft anwendbar. Für noch nicht definierte oder nicht mehr definierte Programmelemente kann beispielsweise ein sog. Default-Identifizierungseintrag vorgesehen sein, welcher mit einem sog. Default-Bindungskopf verkettet ist, an welchen ein sog. Default-Ablaufcode gekettet ist zur Fehlerbehandlung bei einer fallweise vorkommenden Verwendung eines derartigen Programmelementes.

Eine weitere bevorzugte Ausführungsform der Erfindung ist dadurch gekennzeichnet, daß an jeden Bindungskopf einer der folgenden Ablaufcodes gekettet wird:

a) ein Fehler-Interface zu einem Fehlerbehandlungsprogamm für ein noch nicht oder nicht mehr definiertes Programmelement,

b) ein Simulator-interface zu einem Simulator-Programm für ein zu simulierendes Programmelement,

c) ein Interpreter-Interface zu einem Interpreter-Programm für ein zu interpretierendes Programmelement,

d) ein compilierter Programmablauf für ein compiliertes Programmelement.

Je nach Anwendungsfall ist insgesamt im interaktiven System wenigstens einer der aufgezählten Ablaufcodes zur Verwendung vorgesehen, oder mehr als einer, oder alle. Der an den Bindungskopf kettbare Ablaufcode kann dabei für alle derartigen Bindungsköpfe ein einziges Mal angelegt sein zur gemeinsamen Verwendung. Ebenso kann auch für jeden Bindungskopf ein eigener Ablaufcode-Vektor vorgesehen sein. Dieser kann beispielsweise von einem sog. Garbage-Collector bearbeitet werden zur Tilgung von nicht mehr benötigten Datenstrukturen.

Beispielsweise bei LISP-Systemen können häufig nur die Ablaufcodes für das Fehler-Interface, für das Interpreter-Interface und compilierte Programmabläufe vorgesehen sein, so daß das Simulator-Interface beispielsweise bei derartigen Systemen keine Anwendung findet. Ebenso können beispielsweise bei interaktiven Simulator-Systemen nur die Ablaufcodes für das Fehler-Interface, für das Simulator-Interface und compilierte Programmabläufe vorgesehen sein, während beispielsweise das Interpreter-Interface bei derartigen Sytemen keine Anwendung findet. Ebenso können beipsielsweise bei anderen interaktiven Systemen nur die Ablaufcodes für das Fehler-Interface und compilierte Programmabläufe vorgesehen sein, so daß das Simulator-Interface und das Interpreter-Interface keine Anwendung finden. Dabei können diese compilierten Programmabläufe auch andere Interface-Abläufe sein, entsprecheno dem jeweiligen Programmelement des jeweiligen interaktiven Systems. Demnach kann das Fehler-Interface, das Interpreter-Interface, sowie auch das Simulator-Interface als ein Spezialfall eines compilierten Programmablaufs angesehen werden. Beispielsweise bei einem LISP-System können lokale oder globale Compilierungen oder Definierungen von Funktionen, Makros oder Special-Forms als compilierte Programmabläufe für ein Interface vorgesehen sein.

Eine weitere bevorzugte Ausführungsform der Erfindung ist gekennzeichnet durch die Programmelemente eines Lisp-Systems. Das Lisp-System kann dabei in ein System integriert sein. Funktionen werden in Lisp häufig als "first-class" Objekte bezeichnet. Mit anderen Worten, sie können als Argumente oder Rückgabewerte weiterbereicht werden wie Variablenwerte. Die Identifizierungseinträge können für die Lisp-Symbole verwendet werden. Ein Bindungskopf, welcher häufig auch Funktionskopf genannt wird, kann erzeugt werden, beispielsweise für die Common Lisp Sprachelemente DEFUN, LAMBDA, FLET, LABELS, FUNCTION, und DEFMACRO. Für vom Compiler oder vom Lader generierte sog. compilierte Dateien, und ebenso auch für lokale Funktionen und für unbenamte LAMBDA-Ausdrücke können ebenfalls Funktionsköpfe erzeugt werden. Dabei soll für die Funktionsköpfe eine einheitliche Datenstruktur vorgesehen sein, beispielsweise für compilierte Funktionen, Systemfunktionen, zu interpretierende Funktionen, so daß für alle Funktionsarten und Funktionszustände ein gleichartiger Datenzucriff gewährleistet ist. Speziell beim Aufruf einer zu interpretierenden Funktion sollen für eine aufrufende compilierte Funktion im compilierten Programmablauf des Ablaufcodes keine besonderen Maßnahmen und insbesondere keine Abfragen über den Zustand der aufgerufenen Funktion erforderlich sein. Dies würde den Ablauf verlangsamen. Deshalb sollen beispielsweise im Funktionskopf einer zu interpretierenden Funktion die gleichen Strukturen der Einträge vorgesehen sein, wie im Funktionskopf einer compilierten Funktion.

Im Funktionskopf kann die Länge des Funktionskopfes notiert sein. Ebenso kann der Funktionstyp markiert sein, beispielsweise einer zu interpretierenden Funktion, einer compilierten Funktion, einer sog. Special-Form, eines Makros.

4

Jede global definierte Funktion soll einen Identifizierungseintrag für das Symbol aufweisen, in welchem der Funktionsname und eine Kettung zum Funktionskopf zu speichern ist.

Funktionsaufrufe in einer compilierten Funktion können beispielsweise so durchgeführt werden, daß über den jeweiligen Identifizierungseintrag des Symbols auf den Funktionskopf und in der Folge auf den auszuführenden Ablaufcode zugegriffen wird. Die erste Ablaufinstruktion des ausführbaren Ablaufcodes soll nach Bereitstellung der zu übergebenden Parameter angesprungen werden, welche beispielsweise entweder in sog. Frames bereitgestellt werden können, welche häufig auf einem sog. Laufzeit-Stack gehalten werden oder welche beispielsweise auch in Registern übergeben werden können. Zu jedem Symbol mit einem Identifizierungseintrag kann auf diesem Wege ein ausführbarer Ablaufcode aufgefunden werden. Eine Überprüfung, ob beispielsweise eine aufzurufende Funktion in compilierter Form vorliegt, ist deshalb zum Ablaufzeitpunkt nicht erforderlich. Bei einer zu interpretierenden Funktion ist dabei das Interpreter-Interface als Ablaufcode aufrufbar, durch welches aus dem Funktionskopf als ein Quellprogramm die zu interpretierenden Lisp-Sprachelemente, beispielsweise eine LAMBDA-Liste, abholbar sind, welche zusammen mit den bereitgestellten Parametern an den danach aufrufbaren Interpreter weitergegeben werden können. Bei zu simulierenden Funktionen kann in ähnlicher Weise anstelle des Quellprogramms eine Schnittstellenbeschreibung an den Simulator weitergegeben werden. Durch Verwendung von identischen Codeteilen des Ablaufcodes des Interpreter-Interfaces braucht dieser Codeteil im Speicher nur ein einziges Mal vorhanden sein. Gleiches gilt für den entsprechenden Codeteil des Ablaufcodes des Simulator-Interfaces. Ebenso gleiches gilt für den entsprechenden Codeteil des Fehler-Interfaces. Da den noch nicht definierten oder nicht mehr definierten, also den sog. nicht definierten Funktionen und Symbolen ein Funktionskopf zugeordnet werden kann, an welchem als Ablaufcode ein Fehler-Interface gekettet ist, welches gleichermaßen aufrufbar ist, ist zur Laufzeit eine Überprüfung des Zustandes der Definition nicht erforderlich. Die entsprechende Fehlermeldung, daß die Funktion nicht definiert ist, ist durch den Aufruf des Error-Systems als Fehlerbehandlungsprogramm erzielbar.

Eine weitere bevorzugte Ausführungsform der Erfindung ist dadurch gekennzeichnet, daß wenigstens einer der folgenden Dateneinträge im Bindungskopf des Programmelementes eingetragen wird:

a) ein Dateneintrag als ein Kennungseintrag des Bindungskopfes mit einer Längenangabe des Bindungskopfes,

b) ein Dateneintrag als Kettung zum Identifizierungseintrag eines Symboles, welches dem Programmelement zugehörig ist,

c) ein Dateneintrag als Kettung zum Ablaufcode,

d) ein Dateneintrag als Kettung zu einem Environmentblock,

e) ein Dateneintrag als Kettung zu einer Funktionsquelle,

f) ein Dateneintrag als Kettung zu Parametern,

g) ein Dateneintrag als Kettung zu einem Symbol oder einer Konstanten, welche von dem Programmelement benutzt werden.

Je nach Anwendungsfall ist insgesamt im LISP-System wenigstens einer der genannten Dateneinträge zur Verwendung vorgesehen, oder mehr als einer, oder alle. Der Bindungskopf kann dabei beispielsweise als ein sog. G-Vektor ausgeführt sein. Dies kann im Kennungseintrag des Bindekopfes entsprechend vermerkt werden mit der Längenangabe für diesen Datenvektor. Insbesondere für globale Funktionen, Special-Forms und compilierte Closures soll eine Kettung zum Symbol vorgesehen sein. Die Kettung zum Ablaufcode soll immer vorhanden sein. Die Kettung zum Environmentblock, welcher beispielseise bei lokalen Funktionen zur Schaffung von Umgebungen angelegt wird, kanr bei Bedarf eingetragen werden. In einem Bindungskopf einer zu interpretierenden Funktion soll die Kettung zur Funktionsquelle beispielsweise einer zu interpretierenden Liste immer eingetragen sein. Bei einem Bindungskopf für eine compilierte Funktion kann diese Kettung vorhanden sein, auch wenn sie nicht benutzt wird. Die Kettung zu den Parametern ist bei der Bearbeitung der Parameterliste verwendbar, insbesondere für Debugging-Zwecke. Insbesondere bei den Bindungsköpfen von compilierten Funktionen kann die Kettung zu weiteren Symbolen oder Konstanten verwendet werden, insbesondere zur Durchführung von Bindungen oder Funktionsaufrufen aus dem Ablaufcode heraus. Dabei können auch mehrere gleichartige Dateneinträge vorgesehen sein, je nach der Länge dieser funktionseigenen Symboltabelle.

Diese funktionseigene Symboltabelle kann in jedem Funktionskopf einer compilierten Funktion vorgesehen sein, und die Kettungen auf die Symbole der Funktionsnamen enthalten, welche von der Funktion aufgerufen werden. Mit einem fest eincompilierten Offset relativ zum Vektoranfang des Funktionskopfes kann der Zeiger auf das Symbol für eine aufzurufende Funktion ermittelt werden. Als Komponente zu jenem Symbol kann der Identifizierungseintrag des Symbols vorgesehen sein, an welchen der Funktionskopf als weitere Komponente jenes Symbols der aufzurufenden Funktion gekettet ist. Als weitere Komponente eines Symbols der aufzurufenden Funktion ist an den Funktionskopf der Ablaufcode ankettbar, welcher also mittels dieser dreifachen Indirektion erreichbar ist.

5

EP 0 502 857 B1

Diese funktionseigene Symboltabelle ist im Funktionskopf einer interpretierbaren Funktion häufig nicht vorgesehen, wird häufig auch nicht benötigt, da anstelle des funktionsspezifisch compilierten Ablaufcodes, welcher mit fest compilierten funktionsspezifischen Zugriffen auf die funktionseigene Symboltabelle beispielsweise bei inneren Funktionsaufrufen abläuft, für alle interpretierbaren Funktionen derselbe Ablaufcode in Form eines Interpreter-Interfaces für den Übergang zum Interpreter vorgesehen ist, dessen codierte Instruktionen invariant bleiben sollen. Vom Interpreter-Interface kann beispielsweise ein Verweis auf das Quellprogramm auf den Stack, beispielsweise auf den sog. Laufzeit-Stack, gebracht werden. Dabei kann das Interpreter-Interface die einzelnen Argumente nacheinander auf den Stack bringen, bevor der Übergang zum Interpreter durchgeführt wird. Dieser kann in der Folge die Argumente an die Parameter des Quellenprogramms binden. Danach ist das Quellenprogramm evaluierbar. Dabei kann ein vorgefundenes Symbol in Abhängigkeit davon, ob beispielsweise eine Funktion, ein Makro oder eine Special-Form vorliegt, entspeechend evaluiert werden. Dies kann beispielsweise aus dem Kennungseintrag des Bindungskopfes erkennbar sein.

Bei einem vorgefundenen Symbol einer aufzurufenden Funktion kann der Funktionskopf der aufzurufenden Funktion als erstes Element auf den Stack gebracht werden. Als weitere Elemente können die Argumente der aufzurufenden Funktion auf den Stack gebracht werden. Es kann die Schnittstelle zu einer beispielsweise compilierten aufzurufenden Funktion nachgebildet werden, durch einen in Assembler geschriebenen Programmteil, wodurch die Elemente aus den beispielsweise globalen Registern auf den Stack gebracht werden können. Dieser Programmteil kann inline assembliert werden. Sobald der Interpreter die Rückgabeelemente aus dem Stack in die beispielsweise globalen Register transferieren soll, kann er hierfür beispielsweise einen ebenso in Assembler geschriebenen Programmteil verwenden. Dieser kann ebenso inline assembliert werden. Die transferierten Elemente, welche sich auf dem Stack befinden und dadurch zum sog. Frame des Aufrufers gehören, sollen nach dem Verlassen dieser Assembler-Programmteile noch weiterhin existieren. Dies kann auch beispielsweise für sog. MULTIPLE-VALUES anwendbar sein, deren Übergabewerte auch in einem globalen Rückgabepuffer enthalten sein können. Für die aufgerufene compilierte Funktion können auf diese Weise die Argumente überprüft werden. Es kann ein Frame auf dem Stack aufgebaut werden, wobei die Argumente an die richtigen Stellen im Frame gebracht werden sollen. Nach der Rückkehr der compilierten Funktion kann dieser Frame wieder abgebaut werden.

Falls eine compilierte Funktion eine interpretierbare Funktion aufruft, soll der Programmübergang zum Interpreter-Interface erfolgen. Im Interpreter-Interface kann dabei der ebenso in Assembler geschriebene Programmteil verwendet werden, welcher die Argumente aus den Registern oder aus dem Stack zu einem Vektor formen kann, was häufig auch "Einpacken" genannt wird, wobei dieser Vektor auf den Stack gebracht werden kann. Dabei kann ein Verweis auf diesen Vektor dem Interpreter-Interface übergeben werden für die Durchführung der Evaluierung. Auf diese Weise können beispielsweise die Argumente aufbereitet werden für den Interpreter, ohne daß in der aufrufenden compilierten Funktion spezielle Maßnahmen oder Abfragen erforderlich sind, ob die aufgerufene Funktion zu interpretieren ist.

Durch die in Assembler geschriebenen Programmteile können in einfacher Weise Stacks auch als Hardware-Stack ausgebildet sein. Die Stack-Operationen können dadurch vorteilhaft an die Hardware des Zielrechners angepaßt werden. Von vielen Prozessoren werden derartige Stack-Operationen mit fallweise unterschiedlichen Hardware-Leistungsmerkmalen unterstützt, beispielsweise lokalen Registern, automatisches Speichern von Rücksprungadressen, usw.. Bestimmte Stacks können dabei als reine Software-Stacks ausgebildet sein, beispielsweise ein Stack für die dynamischen Wertbindungen der als SPECIAL deklarierten Variablen. Weiters kann ein Stack vorgesehen sein zur Aufnahme beispielsweise von Wertbindungen der Argumentnamen und lokalen Variablen. Dieser kann als reiner Software-Stack vorgesehen sein, oder in einen Hardware-Stack integriert sein. Beispielsweise bei Common-LISP kann für die mit den Sprachelementen FLET und LABELS erzeugten lokalen Funktionen zur Verwaltung ihrer sichtbaren lexikalischen Umgebungen ein weiterer Stack vorgesehen sein.

Für einen Zugriff auf den Stack, welcher häufig unter Ausnutzung der Hardware-Unterstützung des Ziel-Rechnersystems erfolgen soll, kann für das LISP-System eine virtuelle Maschine definiert werden mit einer virtuellen Zwischensprache. Bei der Compilierung kann dann ein sog. "frontend" die virtuelle Maschine berücksichtigen, und ein sog. "backend" kann die Anpassung an den eigentlichen Ziel-Rechner durchführen. Beispielsweise bei den erwähnten inline compilierten Programmteilen, welche im LISP-System verwendet werden, erfolgt vom "backend" die Expandierung und Assemblierung der Instruktionen in der Maschinensprache des eigentlichen Ziel-Rechners. Auf diese Weise sind beispielsweise Stack-Operationen und andere Operationen mit Konstanten, Variablen oder anderen LISP-Objekten durchführbar, mit dem auf-den-Stack-Bringen der Argumente, mit dem Ausführen der durchzuführenden Operationen, sowie mit dem Aufbereiten von fallweise erforderlichen Ergebnissen zur weiteren Behandlung.

Auf diese Weise ist insbesondere eine hohe Portabilität erzielbar.

Für die Bearbeitung von Identifizierungseinträgen kann ein HASH-Coding verwendet werden. Dabei kann

6

beim ersten Zugreifen auf ein Symbol, welches somit bis zu diesem Zeitpunkt noch nie verwendet wurde, unmittelbar durch diesen Zugriff erst ein Identifizierungseintrag für dieses noch nicht definierte Symbol erzeugt werden, als ein Identifizierungseintrag für ein noch nicht definiertes Symbol.

Als Verarbeitungseinheit kann beispielsweise ein Mikroprozessor INTEL 80960, der Firma INTEL verwendet werden. Ebenso kann auch ein ähnlicher RISC-artiger Mikroprozessor verwendet werden, welcher viele Register aufweist und sich insbesondere für Register-Operationen eignet. Beispielsweise für viele kleine Funktionen, wie sie bei LISP-Anwendungen häufig vorkommen, eignet sich häufig ein derartiger Mikroprozessor, beispielsweise mit 16 globalen Registern, und 16 lokalen Registern, welche häufig auch Stack-Register genannt werden, wodurch die Stack-Operationen unterstützt werden können. Insbesondere beim Aufbau oder Abbau eines Frames, welcher aus einer Gruppe von Stack-Einträgen gebildet wird, sind die lokalen Register vorteilhaft anwendbar.

Während eine Ausführungsform der Erfindung als eine reine Software-Lösung, etwa in der Form, daß auch die Stacks reine Software-Stacks sind, insbesondere für die Portabilität des erfindungsgemäßen LISP-Systems große Vorteile aufweist, kann beispielsweise bei einem interaktiven System für eine Großrechenanlage eine bestmögliche Hardware-Unterstützung angestrebt werden, etwa in der Form, daß auch die Zugriffe auf die erfindungsgemäße Datenstruktur der Programmelemente teilweise oder auch zur Gänze von eigens hierfür vorgesehenen Schaltungen oder Schaltungsteilen ausgeführt werden, welche in einem eigens hierfür angeordneten Ausführungsteil eines Verarbeitungselementes des Prozessors realisiert werden können, insbesondere für eine bestmögliche Beschleunigung der Verarbeitung. Diese Ausführungsvariante wird oft auch das "in-Hardware-Gießen" von Verarbeitungsschritten genannt. In diesem Fall sind dies die erfindungsgemäßen Verfahrensschritte.

Die Erfindung wird anhand der Figuren näher erläutert, in welchen ein Ausführungsbeispiel dargestellt ist.

Die Figur 1 zeigt einen Personal Computer und seinen Bildschirm mit Ein/Ausgaben bei Durchführung eines Ausführungsbeispiels.

Die Figur 2 zeigt eine Datenstruktur für eine noch nicht definierte Funktion "FOO".

Die Figur 3 zeigt ein Ablaufflußdiagramm für einen eingegebenen Aufruf einer noch nicht definierten Funktion "FOO".

Die Figur 4 zeigt eine Datenstruktur für eine interpretierbare Funktion "FOO" und eine noch nicht definierte Funktion "FIE".

Die Figur 5 zeigt ein Ablaufflußdiagramm für einen eingegebenen Aufruf einer interpretierbaren Funktion "FOO", welche eine noch nicht definierte Funktion "FIE" aufruft.

Die Figur 6 zeigt eine Datenstruktur für eine compilierte Funktion "FOO" und eine noch nicht definierte Funktion "FIE".

Die Figur 7 zeigt ein Ablaufflußdiagramm für einen eingegebenen Aufruf einer compilierten Funktion "FOO", welche eine noch nicht definierte Funktion "FIE" aufruft.

Die Figur 8 zeigt eine Datenstruktur für eine compilierte Funktion "FOO", eine interpretierbare Funktion "FIE", eine interpretierbare Funktion "FEE", eine compilierte Funktion "2+" und eine Systemfunktion "+".

Die Figur 9 zeigt ein Ablaufflußdiagramm für einen eingegebenen Aufruf einer compilierten Funktion "FOO", welche eine interpretierbare Funktion "FIE" aufruft, welche eine interpretierbare Funktion "FEE" aufruft, welche eine compilierte Funktion "2+" aufruft, welche eine Systemfunktion "+" aufruft.

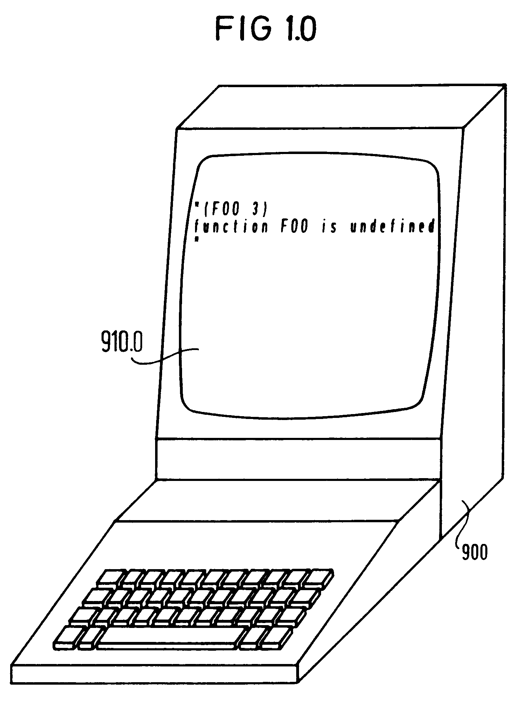

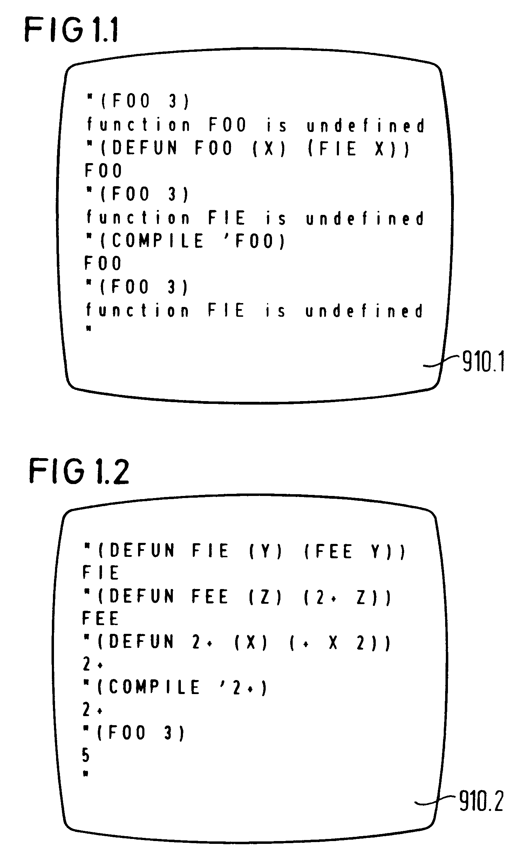

Wie die Figur 1.0 zeigt, wird bei diesem Ausführungsbeispiel ein Personal Computer 900 verwendet. In diesem ist ein erfindungsgemäßes LISP-System geladen und gestartet. Eine Aufforderung "*" zur Eingabe wird in der ersten Zeile auf einem Bildschirm 910.0 des Personal Computers 900 ausgegeben.

Es erfolgt folgende Eingabe:

(FOO 3)

Diese Eingabe wird interpretiert von einem sog. "Reader" des Interpreters und es wird in der Folge, da das Symbol "FOO" zu diesem Zeitpunkt noch nicht definiert ist, folgende Fehlermeldung in der nächsten Zeile ausgegeben:

function FOO is undefined

Danach wird in der nächsten Zeile die Aufforderung "*" zu einer weiteren Eingabe ausgegeben.

Wie die Figur 1.1 zeigt, in welcher der Bildschirm 910.1 mit weiteren Ein/Ausgaben dargestellt ist, erfolgt danach folgende zweite Eingabe:

(DEFUN FOO (X) (FIE X))

Die Eingabe wird bearbeitet, und die Funktion "FOO" wird als interpretierbar definiert. Danach erfolgt in der nächsten Zeile die Ausgabe des Symbols "FOO" als Quittierung der erfolgreich bearbeiteten Eingabe. In der nächsten Zeile wird die Aufforderung "*" zu einer weiteren Eingabe ausgegeben. Es erfolgt folgende dritte Eingabe:

(FOO 3)

Diese Eingabe wird interpretiert, und die interpretierbare Funktion "FOO" wird aufgerufen. Im Funktionsrumpf, welcher häufig auch "body" genannt wird, ist das Symbol "FIE enthalten, welches zu diesem Zeitpunkt noch nicht definiert ist, so daß in der nächsten Zeile folgende Fehlermeldung ausgegeben wird:

function FIE is undefined

Danach wird in der nächsten Zeile die Aufforderung "*" zu einer weiteren Eingabe ausgegeben. Es erfolgt folgende vierte Eingabe:

(COMPILE 'FOO)

Diese Eingabe wird bearbeitet, und die Funktion "FOO" wird compiliert, und ist danach als compiliert definiert. Danach erfolgt in der nächsten Zeile die Ausgabe des Symbols "FOO" als Quittierung der erfolgreich bearbeiteten Eingabe. In der nächsten Zeile wird die Aufforderung "*" zu einer weiteren Eingabe ausgegeben. Es erfolgt folgende fünfte Eingabe:

(FOO 3)

Diese Eingabe wird interpretiert und die compilierte Funktion "FOO" wird aufgerufen. Im Funktionsrumpf ist das Symbol "FIE" enthalten, welches zu diesem Zeitpunkt noch nicht definiert ist, sodaß in der nächsten Zeile folgende Fehlermeldung ausgegeben wird:

function FIE is undefined

Danach wird in der nächsten Zeile die Aufforderung "*" zu einer weiteren Eingabe ausgegeben.

Wie die Figur 1.2 zeigt, in welcher der Bildschirm 910.2 mit weiteren Ein/Ausgaben dargestellt ist, erfolgt danach folgende sechste Eingabe:

(DEFUN FIE (Y) (FEE Y))

Die Eingabe wird bearbeitet und die Funktion "FIE" wird als interpretierbar definiert. Danach erfolgt in der nächsten Zeile die Ausgabe des Symbols "FIE" als Quittierung der erfolgreich bearbeiteten Eingabe. In der nächsten Zeile wird die Aufforderung "*" zu einer weiteren Eingabe ausgegeben. Es erfolgt folgende siebente Eingabe:

(DEFUN FEE (Z) (2+ Z))

Die Eingabe wird bearbeitet, und die Funktion "FEE" wird als interpretierbar definiert. Danach erfolgt in der nächsten Zeile die Ausgabe des Symbols "FEE" als Quittierung der erfolgreich bearbeiteten Eingabe. In der nächsten Zeile wird die Aufforderung "*" zu einer weiteren Eingabe ausgegeben. Es erfolgt folgende achte Eingabe:

(DEFUN 2+ (x) (+ x 2))

Die Eingabe wird bearbeitet, und die Funktion "2+" wird als interpretierbar definiert. Danach erfolgt in der nächsten Zeile die Ausgabe des Symbols "2+" als Quittierung der erfolgreich bearbeiteten Eingabe. In der nächsten Zeile wird die Aufforderung "*" zu einer weiteren Eingabe ausgegeben. Es erfolgt folgende neunte Eingabe:

(COMPILE '2+)

Die Eingabe wird bearbeitet, und die Funktion "2+" wird compiliert und ist danach als compiliert definiert. Danach erfolgt in der nächsten Zeile die Ausgabe des Symbols "2+" als Quittierung der erfolgreich bearbeiteten Eingabe. In der nächsten Zeile wird die Aufforderung "*" zu einer weiteren Eingabe ausgegeben. Es erfolgt folgende zehnte Eingabe:

(FOO 3)

Die Eingabe wird interpretiert, und die compilierte Funktion "FOO" wird aufgerufen, von welcher die interpretierbare Funktion "FIE" aufgerufen wird. Die Funktion "FIE" wird interpretiert. Im Funktionsrumpf wird der Funtionsaufruf "FEE" vorgefunden, und die interpretierbare Funktion "FEE" wird aufgerufen. Die Funktion "FEE" wird interpretiert. Im Funktionsrumpf wird der Funktionsaufruf "2+" vorgefunden, und die zu diesem Zeitpunkt compilierte Funktion "2+" wird aufgerufen, welche ihrerseits die Systemfunktion "+" aufruft, welche ihrerseits weitere innere Systemfunktionen aufruft. Beim Rücksprung übergibt die Systemfunktion den Übergabewert "5". Dieser wird von der Funktion "2+" ebenso als Übergabewert beim Rücksprung übergeben. Ebenso wird von der Funktion "FEE" beim Rücksprung dieser Übergabewert übergeben. Ebenso wird von der Funktion "FIE" beim Rücksprung dieser Übergabewert übergeben. Ebenso wird von der Funktion "FOO" dieser Übergabewert beim Rücksprung an einen sog. "PRINTER" des Interpreters übergeben. Dieser bereitet die Ausgabe des Übergabewertes "5" vor und veranlaßt diese, so daß in der nächsten Zeile auf dem Bildschirm 910.2 als Ergebnis "5" ausgegeben wird. Danach wird in der nächsten Zeile die Aufforderung "*" für weitere Eingaben ausgegeben.

Dieses Ausführungsbeispiel enthält die Programmübergänge von interpretierbaren und compilierten Funktionen zu interpretierbaren, compilierten, noch nicht definierten Funktionen und Systemfunktionen als innere Funktionen. Dies wird nachfolgend näher erläutert.

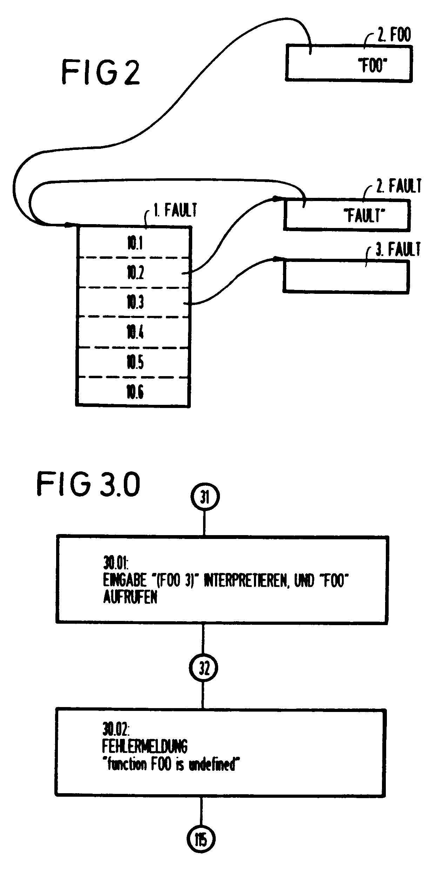

Wie die Figur 2 zeigt, ist vor der ersten Eingabe dieses Ausführungsbeispieles für die noch nicht definierte Funktion "FOO" der Identifizierungseintrag 2.FOO bei diesem Ausführungsbeispiel vorgesehen, an welchen ein Bindungskopf 1.FAULT gekettet ist. Dieser enthält einen Dateneintrag 10.1, durch welchen der Bindungskopf 1.FAULT als G-Vektor mit seiner Länge markiert ist. Weiters enthält der Bindungskopf 1.FAULT einen Dateneintrag 10.2, durch welchen der Identifizierungseintrag 2.FAULT an den Bindungskopf 1.FAULT gekettet ist. Weiters enthält der Bindungskopf 1.FAULT einen Dateneintrag 10.3, durch welchen ein Ablaufcode 3.FAULT an den Bindungskopf 1.FAULT gekettet ist. Dabei ist der Ablaufcode 3.FAULT ein I-Vektor, welcher Ablaufinstruktionen enthält, durch welche bei einem Aufruf der nicht definierten Funktion eine Fehlermeldung ausgebbar ist. Die weiteren Dateneinträge 10.4, 10.5 und 10.6 werden bei diesem Ausführungsbeispiel für die Ausgabe einer Fehlermeldung nicht verwendet.

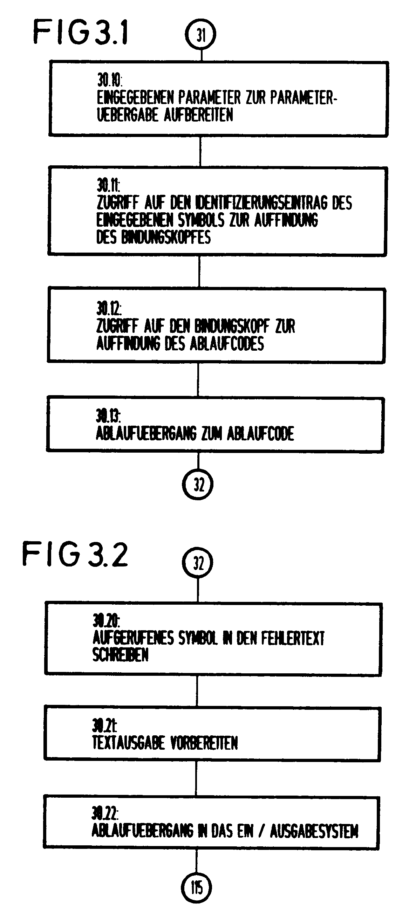

Wie die Figur 3 zeigt, erfolgen nach der ersten Eingabe die dargestellten Programmabschnitte, welche in der Figur 3.0 für einen Überblick zu Programmblöcken zusammengefaßt sind.

Wie die Figur 3.0 zeigt, wird beginnend mit dem Programmkonnektor 31 der Programmblock 30.01 ausgeführt. Es wird die erste Eingabe "(FOO 3)" dieses Ausführungsbeispieles bearbeitet, vgl. Figur 1.0. Diese Eingabe wird interpretiert. Der eingegebene Parameter "3" wird zur Parameterübergabe aufbereitet. Das eingegebene Symbol "FOO" ist zu diesem Zeitpunkt noch nicht definiert. Im erfindungsgemäßen LISP-System dieses Ausführungsbeispieles ist bereits beim Hochlauf des LISP-Systems der Identifizierungseintrag 2.FOO vorhanden, welcher auf den Funktionskopf 1.FAULT verweist, an welchen der Ablaufcode 3.FAULT gekettet ist, vgl. Figur 2. Ein entsprechender Identifizierungseintrag 2 ist beim Hochlauf des LISP-Systems für jedes nicht definierte Symbol bei diesem Ausführungsbeispiel bereits vorhanden. Demzufolge erfolgt beim Aufruf der Funktion "FOO" der Zugriff auf den Identifizierungseintrag 2.FOO, danach der Zugriff auf den Bindungskopf 1.FAULT und nachfolgend erfolgt der Zugriff auf den Ablaufcode 3.FAULT, welcher ausgeführt wird beim Programmkonnektor 32. Bei diesem Ausführungsbeispiel verweist jeder Identifizierungseintrag 2 eines nicht definierten Symboles auf denselben Funktionskopf 1.FAULT.

Beginnend mit dem Programmkonnektor 32 folgt der Programmblock 30.02, durch welchen die Ausgabe der Fehlermeldung "function FOO is undefined" vorbereitet wird. Danach erfolgt beim Programmkonnektor 115 ein Programmübergang in den Printer des Interpreters und danach in das Ein/Ausgabesystem zur Durchführung der Ausgabe der Fehlermeldung und zur Aufforderung zu einer weiteren Eingabe.

Wie die Figur 3.1 zeigt, wird die Eingabe "(FOO 3)" interpretiert, indem in dem Programmabschnitt 30.10, welcher nach dem Programmkonnektor 31 folgt, der eingegebene Parameter "3" zur Parameterübergabe aufbereitet wird. Bei diesem Ausführungsbeispiel erfolgt die Parameterübergabe in einem Register, und in einem weiteren Register wird das eingegebene Symbol übergeben. Danach folgt der Programmabschnitt 30.11. Es erfolgt ein Zugriff auf den Identifizierungseintrag 2.FOO des eingegebenen Symboles "FOO" zur Auffindung des Bindungskopfes, welcher in diesem Fall der Bindungskopf 1.FAULT ist. Danach folgt der Programmabschnitt 30.12. Es erfolgt ein Zugriff auf den Bindungskopf 1.FAULT, auf welchen das eingegebene Symbol verweist, zur Auffindung des Ablaufcodes, welcher in diesem Fall der Ablaufcode 3.FAULT ist. Danach folgt der Programmabschnitt 30.13. Es erfolgt ein Ablaufübergang zum Ablaufcode 3.FAULT beim Programmkonnektor 32.

Die Programmabschnitte 30 zwischen den Programmkonnektoren 31 und 32 sind dabei Teile eines Programms, welches einen Funktionsaufruf in der obersten Ebene durchführt gemäß einer Eingabe. Häufig wird dieser Programmteil auch der "Reader" des Interpreters genannt.

Wie die Figur 3.2 zeigt, folgt nach dem Programmkonnektor 32 der Programmabschnitt 30.20. Aus dem für die Übergabe des Symboles vorgesehenen Register wird das Symbol in den Fehlertext geschrieben, welcher in diesem Fall "function FOO is undefined" ist. Es folgt der Programmabschnitt 30.21. Die Textausgabe wird vorbereitet. Danach folgt der Programmabschnitt 30.22. Beim Programmkonnektor 115 erfolgt der Ablaufübergang zum "Printer" des Interpreters und danach in das Ein/Ausgabesystem. Die Programmabschnitte zwischen den Programmkonnektoren 32 und 33 werden dabei vom Ablaufcode 3.FAULT ausgeführt.

Danach wird vom Ein/Ausgabesystem die Fehlermeldung "function FOO is undefined" auf dem Bildschirm 910 ausgegeben. Danach erfolgt vom Ein/Ausgabesystem die Aufforderung "*" zu einer weiteren Eingabe.

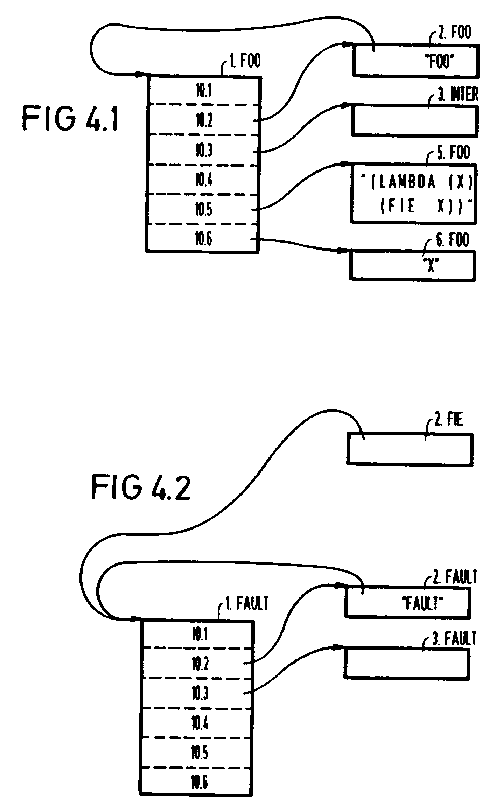

Wie die Figur 4.1 zeigt, ist nach der zweiten Eingabe und vor der dritten Eingabe dieses Ausführungsbeispiels für die als zu interpretierend definierte Funktion "FOO" der Identifizierungseintrag 2.FOO bei diesem Ausführungsbeispiel vorgesehen, an welchen ein Bindungskopf 1.FOO gekettet ist. Dieser enthält einen Dateneintrag 10.1, durch welchen der Bindungskopf 1.FOO als G-Vektor mit seiner Länge markiert ist. Weiters enthält der Bindungskopf 1.FOO einen Dateneintrag 10.2, durch welchen der Identifizierungseintrag 2.FOO an den Bindugskopf 1.FOO gekettet ist. Weiters enthält der Bindungskopf 1.FOO einen Dateneintrag 10.3, durch welchen ein Ablaufcode 3.INTER an den Bindungskopf 1.FOO gekettet ist. Dabei ist der Ablaufcode 3.INTER ein I-Vektor, welcher Ablaufinstruktionen für ein Interpreter-Interface enthält, durch welches bei einem Aufruf der als zu interpretierend definierten Funktion ein Interpreter nachfolgend aufrufbar ist. Ein weiterer Dateneintrag 10.4 des Funktionskopfes 1.FOO ist bei diesem Ausführungsbeispiel durch den Interpreter verwendbar. Der Funktionskopf 1.FOO enthält einen weiteren Dateneintrag 10.5, durch welchen eine Funktionsquelle 5.FOO als Quellenprogramm für den Interpreter in Form einer zu interpretierenden Liste bei diesem Ausführungsbeispiel an den Funktionskopf 1.FOO gekettet ist. Diese ist gemäß der eingegebenen Definition als eine LAMBDA-Liste gleich "(LAMBDA (x) (+ x 2))" bei diesem Ausführungsbeispiel aufbereitet. Der Funktionskopf 1.FOO enthält einen weiteren Dateneintrag 10.6, durch welchen die Namen der Parameter der definierten Funktion an den Funktionskopf 1.FOO gekettet sind. Bei diesem Ausführungsbeispiel wird der Parameter "x" an die Funktion "FOO" gebunden.

Wie die Figur 4.2 zeigt, ist zu diesem Zeitpunkt für das noch nicht definierte Symbol "FIE" ein Identifizierungseintrag 2.FIE vorhanden, welcher auf den Bindungskopf I.FAULT verweist. Diese Datenstruktur für eine nicht definierte Funktion ist bereits anhand der Figur 2 beschrieben.

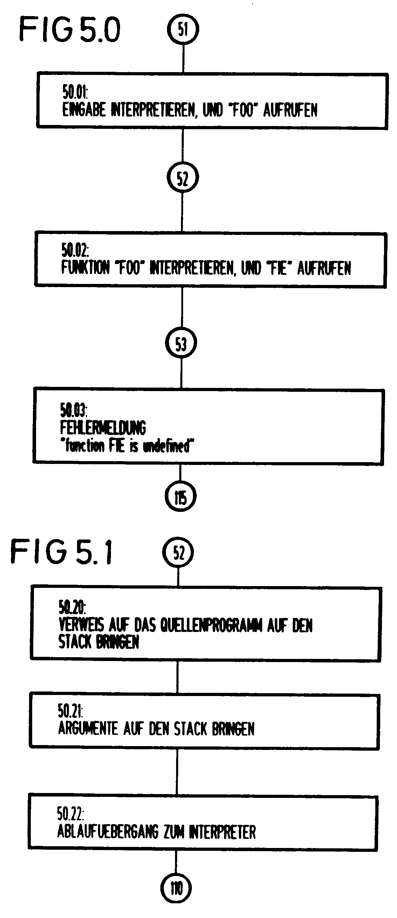

Wie die Figur 5 zeigt, folgen nach der dritten Eingabe die dargestellten Programmabläufe, welche in der Figur 5.0 für einen Überblick zu Programmblöcken zusammengefaßt sind.

Wie die Figur 5.0 zeigt, wird beginnend mit dem Programmkonnektor 51 der Programmblock 50.01 ausgeführt. Es wird die dritte Eingabe "(FOO 3)" dieses Ausführungsbeispieles bearbeitet, vgl. Figur 1.1. Diese Eingabe wird interpretiert. Der eingegebene Parameter "3" wird zur Parameterübergabe aufbereitet. Das eingegebene Symbol "FOO" ist zu diesem Zeitpunkt als interpretierbare Funktion definiert. Wie bereits in der Figur 3.1 dargestellt, folgen die Programmabschnitte für die Aufbereitung des eingegebenen Parameters "3" zur Parameterübergabe, und für den Zugriff auf den Identifizierungseintrag 2.FOO zur Auffindung des Bindungskopfes, welcher in diesem Falle der Bindungskopf 1.FOO ist. Ebenso erfolgt der Zugriff auf den Bindungskopf 1.FOO zur Auffindung des Ablaufcodes, welcher in diesem Falle der Ablaufcode 3.INTER ist. Danach erfolgt der Programmübergang zum Ablaufcode 3.INTER beim Programmkonnektor 52. Dabei werden die identischen Ablaufinstruktionen ausgeführt, welche in der Figur 3.1 dargestellt sind. In einer völlig gleichen Weise kann mit den identischen Ablaufinstruktionen auf einen Bindungskopf zugegriffen werden, obwohl in beiden Fällen die zugehörige Funktion in einem völlig anderen Definitionszustand vorliegt. Dies ist deshalb möglich, weil in beiden Fällen eine gleiche Struktur für die Datenkettung vorgesehen ist.

Beginnend mit dem Programmkonnektor 52 folgt der Programmblock 50.02. Der Ablaufcode 3.INTER wird ausgeführt, welcher als ein Interpreter-Interface vorgesehen ist. Das Quellenprogramm 5.FOO, welches in diesem Fall "(LAMBDA (x) (FIE x))" ist, und das Argument "x" wird für den Interpreter auf den Stack gebracht, welcher bei diesem Ausführungsbeispiel als sog. Laufzeit-Stack ausgebildet ist, und es erfolgt der Ablaufübergang zum Interpreter. Dieser nun folgende Programmteil wird häufig als der sog. "Evaluator" des Interpreters bezeichnet.

Der Interpreter bindet den eingegebenen und übergebenen Parameter "3" an "x", den Parameter des Ouellenprogramms. Der Ausdruck "(FIE x)" wird evaluiert. Das Symbol "FIE" wird an dieser Stelle normalerweise untersucht, ob es eine Funktion, ein Makro oder eine SPECIAL-FORM ist.

Bei diesem Ausführungsbeispiel wird ein erfindungsgemäßes LISP-System verwendet, welches ohne Makros und ohne Special-Forms implementiert ist, so daß an dieser Stelle eine diesbezügliche Unterscheidung nicht erforderlich ist. Diese könnte beispielsweise durch einen Zugriff auf den Identifizierungseintrag des Symbols und einen Zugriff auf den Bindungskopf erfolgen, in welchem im Kennungseintrag des Dateneintrages 10.1 eine derartige Markierung eintragbar ist.

Bei diesem Ausführungsbeispiel ist das Symbol "FIE" demnach als eine Funktion zu interpretieren. In der Folge evaluiert der Interpreter die Argumente der Funktion. Die Variable "X" wird evaluiert, und dies liefert den Wert "3". Dieser Wert wird beim nachfolgenden Funktionsaufruf der Funktion "FIE" in einem Register übergeben. Für den Funktionsaufruf erfolgt ein Zugriff auf den Identifizierungseintrag 2.FIE zur Auffindung des Bindungskopfes, mit einem Zugriff auf den Bindungskopf zur Auffindung des Ablaufcodes, welcher nach einem Ablaufübergang beim Programmkonnektor 53 ausgeführt wird. In diesem Fall wird der Ablaufcode 3.FAULT als Programmblock 50.03 ausgeführt, so daß die Fehlermeldung "function FIE is undefined" aufbereitet wird. Dabei sind die Ablaufinstruktionen des Programmblockes 50.03 identisch mit den bereits in Figur 3.2 dargestellten.

Beim Programmkonnektor 115 erfolgt der Ablaufübergang zum Printer des Interpreters und in das Ein/Ausgabesystem.

Zwischen den Programmkonnektoren 53 und 115 werden dabei die bereits in Figur 3.2 dargestellten Ablaufinstruktionen ausgeführt.

Wie die Figur 5.1 zeigt, folgt nach dem Programmkonnektor 52 der Programmabschnitt 50.20. Ein Verweis auf das Quellenprogramm wird auf den Stack gebracht. In diesem Fall ist dies das Quellenprogramm "(LAMBDA (X) (FIE X))". Es folgt der Programmabschnitt 50.21. Die einzelnen Argumente der aufgerufenen Funktion werden nacheinander auf den Stack gebracht. In diesem Fall ist nur das Argument "X" auf den Stack zu bringen. Danach folgt der Programmabschnitt 50.22. Es wird ein Ablaufübergang zum Evaluator des Interpreters durchgeführt beim Programmkonnektor 110. Der Interpreter bindet die Übergabewerte, in diesem Fall "3" an den Parameter "X" des Quellprogramms. Danach wird das Quellprogramm evaluiert. Für die Funktion "FIE" werden die Argumente evaluiert. In diesem Fall wird die Variable "X" evaluiert. Dies liefert den Wert "3". Danach erfolgt der Aufruf der Funktion "FIE" mittels Zugriff auf den Identifizierungseintrag 2.FIE, der Zugriff auf den Bindungskopf l.FAULT und der Ablaufübergang zum Ablaufcode 3.FAULT, vgl. Figur 4.

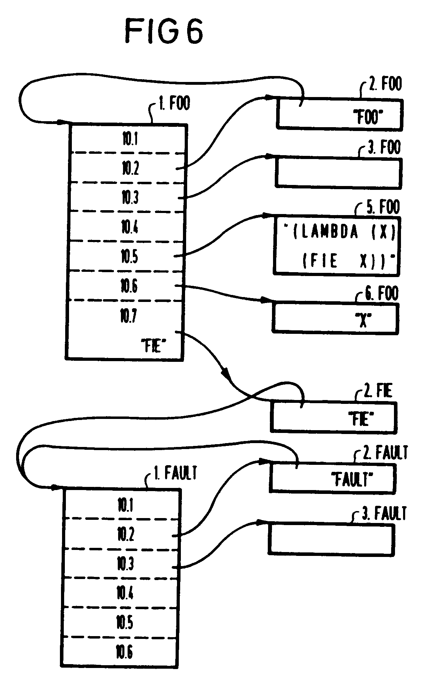

Wie die Figur 6 zeigt, ist vor der fünften Eingabe und nach der vierten Eingabe dieses Ausführungsbeispieles für die als compiliert definierte Funktion "FOO" der Identifizierungseintrag 2.FOO bei diesem Ausführungsbeispiel vorgesehen, an welchen ein Bindungskopf 1.FOO gekettet ist. Dieser enthält einen Dateneintrag 10.1, durch welchen dieser Bindungskopf 1.FOO als G-Vektor mit seiner Länge markiert ist. Weiters enthält der Bindungskopf 1.FOO einen Dateneintrag 10.2, durch welchen der Identifizierungseintrag 2.FOO an den Bindungskopf 1.FOO gekettet ist. Weiters enthält der Bindungskopf 1.FOO einen Dateneintrag 10.3, durch welchen ein Ablaufcode 3.FOO an den Bindungskopf 1.FOO gekettet ist. Dabei ist der Ablaufcode 3.FOO ein I-Vektor, welcher Ablaufinstruktionen enthält, durch welche bei einem Aufruf der als compiliert definierten Funktion "FOO" das Ergebnis der Compilierung der Funktion "FOO" als Funktionscode aufrufbar ist. Ein weiterer Dateneintrag 10.4 des Funktionskopfes 1.FOO ist durch den Ablaufcode 3.FOO als Kettung zu einem Environmentblock zwar verwendbar, aber bei diesem Ausführungsbeispiel ist eine Kettung auf "NIL" eingetragen. Der Funktionskopf 1.FOO enthält einen weiteren Dateneintrag 10.5, welcher nach wie vor das Quellenprogramm enthält. Dieser wird aber nicht benutzt. Der Funktionskopf 1.FOO enthält einen weiteren Dateneintrag 10.6, durch welchen die Namen der Parameter der definierten Funktion an den Funktionskopf 1.FOO gekettet sind. Dieser ist für Debugging Zwecke vorgesehen, wird aber bei diesem Ausführungsbeispiel nicht benutzt. Bei diesem Ausführungsbeispiel ist der übergebene Parameter "3" an das Argument "X" der Funktion "FOO" zu binden. Der Funktionskopf 1.FOO enthält einen weiteren Dateneintrag 10.7, an welchem bei der Compilierung der Funktion "FOO" die als innere aufzurufende Funktion "FIE" eingetragen ist. Entsprechend der Längenangabe im Dateneintrag 10.1 können gemäß der Definition der compilierten Funktion noch weitere aufzurufende Funktionen in Form von weiteren Dateneinträgen 10.7 vorgesehen sein. Bei diesem Ausführungsbeispiel ist bei der Funktion "FOO" nur eine innere Funktion aufzurufen, nämlich die Funktion "FIE". Deshalb ist im Dateneintrag 10.7 eine Kettung auf einen Identifizierungseintrag 2.FIE für das Symbol "FIE" vorgesehen.

Für das Symbol "FIE", für welches zu diesem Zeitpunkt noch keine Funktion definiert ist, ist nach wie vor dieselbe Datenstruktur vorgesehen, welche in Figur 4.2 dargestellt ist.

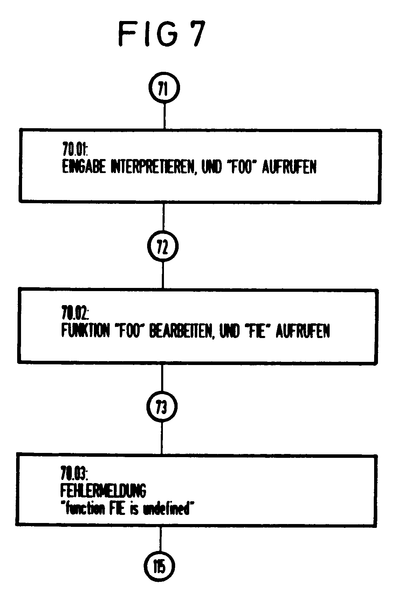

Wie die Figur 7 zeigt, folgen nach der fünften Eingabe die dargestellten Programmabläufe, welche in der Figur 7 für einen Überblick zu Programmblöcken zusammengefaßt sind.

Wie die Figur 7 zeigt, wird beginnend mit dem Programmkonnektor 71 der Programmblock 70.01 ausgeführt. Es wird die fünfte Eingabe "(FOO 3)" dieses Ausführungsbeispieles bearbeitet, vgl. Figur 1.1. Diese Eingabe wird interpretiert. Der eingegebene Parameter "3" wird zur Parameterübergabe aufbereitet. Das eingegebene Symbol "FOO" ist zu diesem Zeitpunkt als compilierte Funktion definiert. Wie bereits in der Figur 3.1 dargestellt, erfolgen die Programmabschnitte für die Aufbereitung des eingegebenen Parameters "3", für den Zugriff auf den Identifizierungseintrag 2.FOO, für den Zugriff auf den Bindungskopf 1.FOO, und für den Ablaufübergang zum Ablaufcode 3.FOO, welcher in diesem Falle nach einem Ablaufübergang ausgeführt wird beim Programmkonnektor 72.

Beginnend mit dem Programmkonnektor 72 folgt der Programmblock 70.02. Der compilierte Ablaufcode 3.FOO der Funktion "FOO" wird ausgeführt. Für den Aufruf der inneren Funktion "FIE" wird auf den Dateneintrag 10.7 des Bindungskopfes 1.FOO zugegriffen, vgl. Figur 6, welcher auf den Identifizierungseintrag 2.FIE verweist. Es erfolgt der Zugriff auf den Identifizierungseintrag 2.FIE, welcher zu diesem Zeitpunkt auf den Bindungskopf 1.FAULT veweist. Es erfolgt der Zugriff auf den Dateneintrag 10.3 des Bindungskopfes 1.FAULT, welcher auf den Ablaufcode 3.FAULT verweist. Es wird der Ablaufübergang zum Ablaufcode 3.FAULT durchgeführt beim Programmkonnektor 73.

Beginnend mit dem Programmkonnektor 73 folgt der Programmblock 70.03. Es folgen die in Figur 3.2 dargestellten Instruktionen, und die Fehlermeldung "function FIE is undefined" wird aufbereitet. Es erfolgt der Ablaufübergang zum Printer des Interpreters und in das Ein/Ausgabesystem beim Programmkonnektor 115.

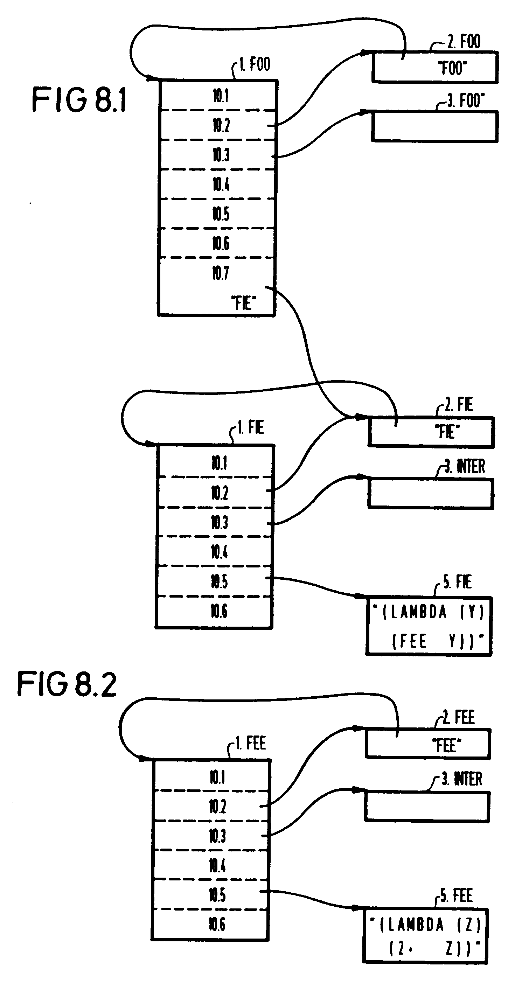

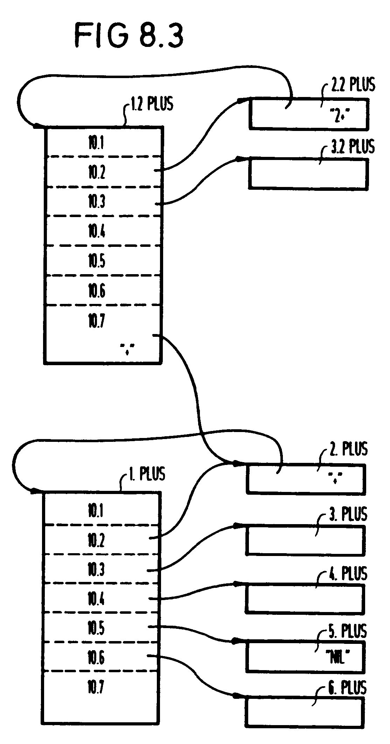

Wie die Figur 8.1 zeigt, ist vor der zehnten Eingabe und nach der neunten Eingabe dieses Ausführungsbeispieles für die als compiliert definierte Funktion "FOO" der Identifizierungseintrag 2.FOO vorgesehen, an welchen der Bindungskopf 1.FOO gekettet ist. Dieser enthält den Dateneintrag 10.2, durch welchen der Identifizierungseintrag 2.FOO an den Bindungskopf 1.FOO gekettet ist. Weiters enthält der Bindungskopf 1.FOO den Dateneintrag 10.3, durch welchen der compilierte Ablaufcode 3.FOO der Funktion "FOO" an den Bindungskopf 1.FOO gekettet ist. Weiters enthält der Bindungskopf 1.FOO den Dateneintrag 10.7, welcher auf den Identifizierungseintrag 2.FIE des Symbols "FIE" verweist.

An den Identifizierungseintrag 2.FIE ist der Bindungskopf 1.FIE gekettet. Dieser enthält den Dateneintrag 10.2, durch welchen der Identifizierungseintrag 2.FIE an den Bindungskopf 1.FIE gekettet ist. Weiters enthält der Bindungskopf 1.FIE den Dateneintrag 10.3, durch welchen der Ablaufcode 3.INTER als Interpreter-Interface an den Bindungskopf 1.FIE gekettet ist. Weiters enthält der Bindungskopf den Dateneintrag 10.5, durch welchen das Quellprogramm 5.FIE in Form der LAMBDA-Liste "(LAMBDA (Y) (FEE Y))" an den Bindungskopf 1.FIE gekettet ist.

Wie die Figur 8.2 zeigt, ist zu diesem Zeitpunkt der Bindungskopf 1.FEE an den Identifizierungseintrag 2.FEE des Symbols "FEE" gekettet. Der Bindungskopf 1.FEE enthält den Identifizierungseintrag 10.2, durch welchen der Identifizierungseintrag 2.FEE an den Bindungskopf 1.FEE gekettet ist. Weiters enthält der Bindungskopf 1.FEE den Dateneintrag 10.3, durch welchen der Ablaufcode 3.INTER als Interpreter-Interface an den Bindungskopf 1.FEE gekettet ist. Weiters enthält der Bindungskopf 1.FEE den Dateneintrag 10.5, durch welchen das Quellprogramm 5.FEE in Form der LAMBDA-Liste "(LAMBDA (Z) (2+ Z))" an den Bindungskopf 1.FEE gekettet ist.

Wie die Figur 8.3 zeigt, ist zu diesem Zeitpunkt für die compiliert definierte Funktion "2+" der Identifizierungseintrag 2.2PLUS vorgesehen, an welchen der Bindungskopf 1.2-PLUS gekettet ist. Dieser enthält den Dateneintrag 10.2, durch welchen der Identifizierungseintrag 2.2PLUS an den Bindungskopf 1.2PLUS gekettet ist. Weiters enthält der Bindungskopf 1.2PLUS den Dateneintrag 10.3, durch welchen der compilierte Ablaufcode 3.2PLUS an den Bindungskopf 1.2PLUS gekettet ist. Weiters enthält der Bindungskopf 1.2PLUS den Dateneintrag 10.7, welcher auf den Identifizierungseintrag 2.PLUS des Symbols "+" verweist.

Für die als Systemfunktion definierte Funktion "+" ist der Identifizierungseintrag 2.PLUS bei diesem Ausführungsbeispiel vorgesehen, an welchen ein Bindungskopf 1.PLUS gekettet ist. Dieser enthält einen Dateneintrag 10.1, durch welchen dieser Bindungskopf 1.PLUS als G-Vektor mit seiner Länge markiert ist. Weiters enthält der Bindungskopf 1.PLUS einen Dateneintrag 10.2, durch welchen der Identifizierungseintrag 2.PLUS an den Bindungskopf I.PLUS gekettet ist. Weiters enthält der Bindungskopf 1.PLUS einen Dateneintrag 10.3, durch welchen ein Ablaufcode 3.PLUS an den Bindungskopf 1.PLUS gekettet ist. Dabei ist der Ablaufcode 3.PLUS ein I-Vektor, welcher Ablaufinstruktionen enthält, durch welche bei einem Aufruf der Ablaufcode der Systemfunktion "+" ausgeführt wird. Ein weiterer Dateneintrag 10.4 des Bindungskopfes 1.PLUS ist bei diesem Ausführunsbeispiel durch den Ablaufcode 3.PLUS als Kettung zu einem Environmentblock 4.PLUS verwendbar. Der Bindungskopf 1.PLUS enthält einen weiteren Dateneintrag 10.5, welcher normalerweise auf ein Quellprogramm verweist. Bei Systemfunktionen ist kein Quellprogramm vorgesehen, und deshalb ist dieses gleich "NIL". Der Bindungskopf 1.PLUS enthält einen weiteren Dateneintrag 10.6, durch welchen die Namen der Parameter der Systemfunktion an den Funktionskopf 1.PLUS gekettet sind. Bei diesem Ausführungsbeispiel sind zwei Parameter an die beiden Argumente der Systemfunktion "+" zu binden. Der Funktionskopf 1.PLUS enthält weitere Dateneinträge 10.7, welche für die Systemfunktion "+" auf inneren Funktionen, Konstanten und Symbole verweist.

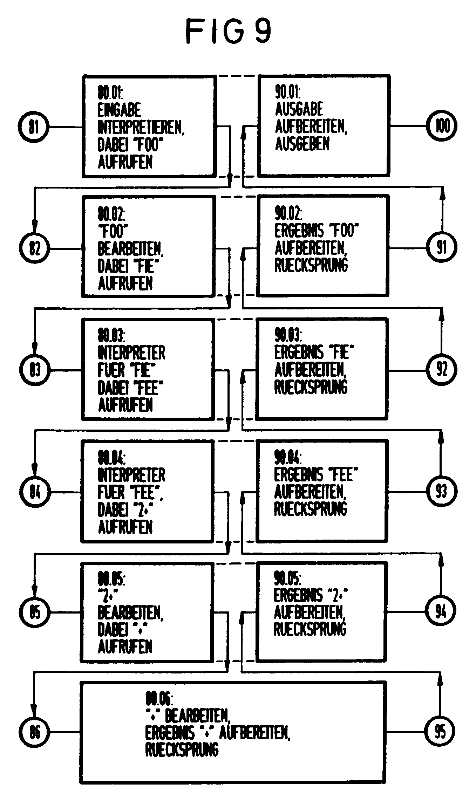

Wie die Figur 9 zeigt, erfolgen nach der zehnten Eingabe und vor der Ausgabe des Ergebnisses die dargestellten Programmabläufe, welche für einen Überblick zu Programmblöcken zusammengefaßt sind.

Beginnend mit einem Programmkonnektor 81 wird der Programmblock 80.01 ausgeführt. Es wird die zehnte Eingabe "(FOO 3)" bearbeitet. Für die aufgerufene Funktion "FOO" wird der eingegebene Parameter "3" zur Parameterübergabe aufbereitet. Danach erfolgt zum Aufruf der Funktion "FOO" der Programmübergang beim Programmkonnektor 82. Beginnend mit dem Programmkonnektor 82 folgt der Programmblock 80.02. Es wird die aufgerufene und zu diesem Zeitpunkt compiliert vorliegende Funktion "FOO" bearbeitet. Zum Aufruf der Funktion "FIE" wird vom compilierten Ablaufcode 3.FOO im Bindungskopf 1.FIE auf den Dateneintrag 10.7 zugegriffen, welcher auf den Identifizierungseintrag 2.FIE des Symbols "FIE" verweist. Nach einem Zugriff auf diesen erfolgt ein Zugriff auf den Bindungskopf 1.FIE. Dieser verweist auf den Ablaufcode 3.INTER. Es erfolgt der Ablaufübergang beim Programmkonnektor 83 zum auf diese Weise aufgefundenen Ablaufcode 3.INTER.

Der Programmblock 80.03 wird ausgeführt. Vom Ablaufcode 3.INTER wird ein Verweis auf das an den Bindungskopf 1.FIE gekettete Quellprogramm 5.FIE, welches gleich "(LAMBDA (y) (FEE y))" ist, auf den Stack gebracht. Danach wird der übergebene Wert "3" auf den Stack gebracht. Es erfolgt der Ablaufübergang zum Evaluator des Interpreters. Dieser bindet den Wert "3" an "Y", den Parameter des Quellenprogramms. Der Funktionsrumpf dieses Quellprogramms, welcher gleich "(FEE Y)" ist, wird evaluiert. Die Variable "Y" wird evaluiert. Dies liefert den Wert "3". Die Funktion "FEE" soll aufgerufen werden. Es folgen die Stack-Operationen für die Parameterübergabe. Es erfolgt ein Zugriff auf den Identifizierungseintrag 2.FEE des Symbols "FEE". Danach erfolgt der Zugriff auf den Bindungskopf 1.FEE, an welchen der Ablaufcode 3.INTER gekettet ist. Es folgt der Ablaufübergang zum Ablaufcode 3.INTER beim Programmkonnektor 84.

Der Programmblock 80.04 wird ausgeführt. Vom Ablaufcode 3.INTER wird das an den Bindungskopf 1.FEE gekettete Quellprogramm 5.FEE, welches gleich "(LAMBDA (Z) (2+ Z))" ist, auf den Stack gebracht. Danach wird der übergebene Wert "3" auf den Stack gebracht. Es erfolgt der Ablaufübergang zum Evaluator des Interpreters. Dieser bindet den Wert "3" an "Z", den Parameter des Quellprogramms. Der Funktionsrumpf "(2+ Z)" wird evaluiert. Die Variable "Z" wird evaluiert zu "3". Nach den Stack-Operationen für die Parameter-Übergabe wird die Funktion "2+" aufgerufen. Es erfolgt ein Zugriff auf den Identifizierungseintrag 2.2PLUS des Symbols "2+", und nachfolgend auf den Bindungskopf 1.2-PLUS, an welchen der compilierte Ablaufcode 3.2PLUS der Funktion "2+" gekettet ist. Es erfolgt der Ablaufübergang zum Ablaufcode 3.2PLUS beim Programmkonnektor 85.

Der Programmblock 80.05 wird ausgeführt. Vom Ablaufcode 3.2-PLUS wird die Systemfunktion "+" aufgerufen. Im Bindungskopf 1.2PLUS wird auf den Dateneintrag 10.7 zugegriffen, welcher auf den Identifizierungseintrag 2.PLUS des Symbols "+" verweist, an welchen der Bindungskopf 1.PLUS gekettet ist, an welchen wiederum der Ablaufcode 3.PLUS der Systemfunktion "+" gekettet ist. Es erfolgt beim Programmkonnektor 86 der Ablaufübergang zum auf diese Weise aufgefundenen Ablaufcode 3.PLUS.

Beginnend mit dem Programmkonnektor 86 folgt der Programmblock 80.06. Es wird die aufgerufene Funktion "+" bearbeitet. Die für die Funktion "+" übergebenen Parameter "3" und "2" werden gemäß einer Addition verknüpft. Als Ergebnis für die aufgerufene Funktion "+" wird der Parameter "5" zur Übergabe aufbereitet. Danach erfolgt als Rücksprung der Programmübergang beim Programmkonnektor 95.

Beginnend mit dem Programmkonnektor 95 folgt der Programmblock 90.05. Es wird der als Ergebnis der aufgerufenen Funktion "+" übergebene Parameter "5" bearbeitet. Als Ergebnis für die aufgerufene Funktion "2+" wird der übergebene Parameter "5" zur weiteren Übergabe aufbereitet. Danach erfolgt als Rücksprung der Programmübergang beim Programmkonnektor 94. Beginnend mit dem Programmkonnektor 94 folgt der Programmblock 90.04. Es wird der als Ergebnis der aufgerufenen Funktion "2+" übergebene Parameter "5" vom Interpreter bearbeitet und zur weiteren Übergabe aufbereitet. Nach Durchführung der Stack-Operationen erfolgt der Rücksprung aus dem Interpreter beim Programmkonnektor 93. Dabei erfolgt der Ablaufübergang vom Interpreter in den Interpreter. Ebenso wie beim Funktionsaufruf werden beim Rücksprung Stack-Pointer verändert.

Es folgt der Programmblock 90.03. Es wird der als Ergebnis der aufgerufenen Funktion "FEE" übergebene Parameter "5" vom Interpreter bearbeitet und zur weiteren Übergabe aufbereitet. Nach Durchführung der Stack-Operationen erfolgt der Rücksprung aus dem Interpreter beim Programmkonnektor 92 in den compilierten Ablaufcode 3.FOO der Funktion FOO.

Es folgt der Programmblock 90.02. Es wird der als Ergebnis der aufgerufenen Funktion "FIE" übergebene Parameter "5" zur weiteren Übergabe aufbereitet. Danach erfolgt der Rücksprung aus dem compilierten Ablaufcode 3.FOO der Funktion "FOO" beim Programmkonnektor 91.

Es folgt der Programmblock 90.01. Es wird der als Ergebnis der aufgerufenen Funktion "FOO" übergebene Parameter "5" für die Ausgabe des Ergebnisses aufbereitet.

Danach erfolgt für die Ausgabe der Programmübergang beim Programmkonnektor 100 zum Printer des Interpreters und in das Ein-/Ausgabesystem dieses Ausführungsbeispiels.

Dabei sind die Programmblöcke 80.01 und 90.01 als ein Teil eines Progammkomplexes zur Bearbeitung von Ein-/Ausgaben vorgesehen. Bezogen auf die Hierarchie der Funktionsaufrufe mit ihren inneren Funktionsaufrufen werden häufig für diese Programmblöcke die Bezeichnung "TOP" oder "TOP-LEVEL" verwendet.

Die Programmblöcke 80.02 und 90.02 sind als compilieter Ablaufcode 3.FOO für die Bearbeitung der Funktion "FOO" vorgesehen.

Die Programmblöcke 80.03 und 90.03, sowie ebenso die Programmblöcke 80.04 und 90.04 werden vom Interpreter-Interface 3.INTER und vom Interpreter gebildet. Dabei sind die Programmblöcke 80.03 und 90.03 zur Ausführung der aufgerufenen Funktion "FIE" vorgesehen, welche zu diesem Zeitpunkt als interpretierbar definiert ist, und als inneren Funktionsaufruf die Funktion "FIE" aufruft. Die Programmblöcke 80.04 und 90.04 sind zur Ausführung der aufgerufenen Funktion "FEE" vorgesehen, welche zu diesem Zeitpunkt als interpretierbar definiert ist, und als inneren Funktionsaufruf die Funktion "2+" aufruft.

Die Programmblöcke 80.05 und 90.05 sind als Ablaufcode 3.2-PLUS für die Bearbeitung der Funktion "2+" vorgesehen. Der Programmblock 80.06 ist als Ablaufcode 3.PLUS für die Bearbeitung der Systemfunktion "+" vorgesehen.

Bei diesem Ausführungsbeispiel und in Zusammenhang mit den Figuren wird dabei folgende Bezugszeichenliste verwendet:

```
1            Bindungskopf, Funktionskopf
2            Identifizierungseintrag
3            Ablaufcode
4            Environmentblock
5            zu interpretierende Liste der Funktionsquelle
6            Liste der Parameter
10           Dateneintrag im Bindungskopf
30, 50, 70, 80, 90
             Programmabschnitt, Programmblock
31, 32, 51, 52, 53, 71, 72, 73, 81, 82, 83, 84, 85,
86, 91, 92, 93, 94, 95, 100, 110, 115
             Programmkonnektoren
900          Personalcomputer
910          Bildschirm
```

Bei diesem Ausführungsbeispiel kann gezeigt werden, daß infolge des erfindungsgemäßen Verfahrens in einem interaktiven System Programmelemente verwendet werden können durch Zugriffe auf einen Bindungskopf, ohne daß eine Zustandsabfrage erforderlich ist. Daraus ergeben sich insbesondere durch den Wegfall der bei bisherigen interaktiven Systemen sehr aufwendigen Zustandsfragen insbesondere große Vorteile betreffend eine stark reduzierte Programmlaufzeit.

**Patentansprüche**

1. Verfahren zur dynamischen Bindung von Programmelementen eines interaktiven Datenverarbeitungsystems, bei welchem durch die Programmelemente Abläufe des interaktiven Datenverarbeitungssystems definierbar sind mit folgenden Merkmalen:
   a) jedem Programmelement wird ein Binaungskopf (1) als ein Datenblock zur Aufnahme von Kettungsinformationen (10) zugeordnet,
   b) an den Bindungskopf wird über die Kettungsinformation ein Ablaufcode (3) gekettet,
   c) der Ablaufcoae wird entsprechend der Funktion des Programmelementes erzeugt,
   d) wenn ein Programmelement ausgeführt wird, dann wird über den zugehörigen Bindungskopf (1) auf den geketteten Ablaufcode (3) zugegriffen, und der Ablaufcode ausgeführt.

2. Verfahren nach Anspruch 1,
   dadurch **gekennzeichnet,**
   daß zur leichteren Auffindung des Bindungskopfes (1) das Programmelement einen auf den Bindungskopf (1) verweisenden Identifizierungseintrag (2) erhält.

3. Verfahren nach Anspruch 1 oder 2,
   dadurch **gekennzeichnet,**
   daß an jeden Bindungskopf (1) einer der folgenden Ablaufcodes (3) gekettet wird:
   a) ein Fehler-Interface (3.FAULT) zu einem Fehlerbehandlungsprogramm für ein noch nicht oder nicht mehr definiertes Programmelement,
   b) ein Simulator-Interface zu einem Simulator-Programm für ein zu simulierendes Programmelement,
   c) ein Interpreter-Interface (3.INTER) zu einem Interpreter-Programm für ein zu interpretierendes Programmelement,
   d) ein compilierter Programmablauf (3.FOO,3.2PLUS, 3.PLUS) für ein compiliertes Programmelement.

4. Verfahren nach Anspruch 3,
   **gekennzeichnet**

durch die Programmelemente eines Lisp-Systems.

5. Verfahren nach Anspruch 4,
dadurch **gekennzeichnet,**
daß wenigstens einer der folgenden Dateneinträge (10) im Bindungskopf (1) des Programmelementes eingetragen wird:
a) ein Dateneintrag (10.1) als ein Kennungseintrag des Bindungskopfes (1) mit einer Längenangabe des Bindungskopfes (1),
b) ein Dateneintrag (10.2) als Kettung zum Identifizierungseintrag (2) eines Symboles, welches dem Programmelement zugehörig ist,
c) ein Dateneintrag (10.3) als Kettung zum Ablaufcode (3)
d) ein Dateneintrag (10.4) als Kettung zu einem Environmentblock (4),
e) ein Dateneintrag (10.5) als Kettung zu einer Funktionsquelle (5),
f) ein Dateneintrag (10.6) als Kettung zu Parametern (6),
g) ein Dateneintrag (10.7) als Kettung zu einem Symbol oder einer Konstanten, welche von dem Programmelement benutzt werden.

## Claims

1. Method for dynamically linking program elements of an interactive data processing system, in which it is possible to define operations of the interactive data processing system by the program elements, having the following features:
a) a link header (1) is assigned to each program element as a data block for storing chaining information (10),
b) an execution code (3) is chained to the link header via the chaining information,
c) the execution code is generated in accordance with the function of the program element,
d) when a program element is executed, then the chained execution code (3) is accessed via the assigned link header (1) and the execution code is executed.

2. Method according to Claim 1, characterised in that the program element receives an identification entry (2) referencing the link header (1) for easier location of the link header (1).

3. Method according to Claim 1 or 2, characterised in that one of the following execution codes (3) is chained to each link header (1):
a) an error interface (3.FAULT) to an error handling program for an as yet undefined or no longer defined program element,
b) a simulator interface to a simulator program for a program element to be simulated,
c) an interpreter interface (3.INTER) to an interpreter program for a program element to be interpreted,
d) a compiled program sequence (3.FOO, 3.2PLUS, 3.PLUS) for a compiled program element.

4. Method according to Claim 3, characterised by the program elements of a LISP system.

5. Method according to Claim 4, characterised in that at least one of the following data entries (10) is entered in the link header (1) of the program element:
a) a data entry (10.1) as an identifier entry of the link header (1) with a length specification for the link header (1),
b) a data entry (10.2) as link to the identification entry (2) of a symbol which is associated with the program element,
c) a data entry (10.3) as link to the execution code (3),
d) a data entry (10.4) as link to an environment block (4),
e) a data entry (10.5) as link to a function source (5),
f) a data entry (10.6) as link to parameters (6),
g) a data entry (10.7) as link to a symbol or a constant which are used by the program element.

**Revendications**

1.  Procédé de liaison dynamique d'éléments de programme d'un système interactif de traitement de données, selon lequel les cycles du système interactif de traitement de données peuvent être définis grâce aux éléments de programme, présentant les caractéristiques suivantes :
    a) à chaque élément de programme est associée une tête de liaison (1) sous la forme d'un bloc de données pour la réception d'informations de chaînage (10),
    b) un code d'exécution (3) est chaîné à la tête de liaison par l'intermédiaire de l'information de chaînage,
    c) le code d'exécution est produit conformément à la fonction de l'élément de programme,
    d) lorsqu'un élément de programme est exécuté, un accès est réalisé au code d'exécution chaîné (3), par l'intermédiaire de la tête associée de liaison (1), et le code d'exécution est exécuté.

2.  Procédé suivant la revendication 1, caractérisé par le fait que pour faciliter la détection de la tête de liaison (1), l'élément de programme reçoit une entrée d'identification (2) qui désigne la tête de liaison (1).

3.  Procédé suivant la revendication 1 ou 2, caractérisé par le fait
    qu'à chaque tête de liaison (1) est chaîné l'un des codes d'exécution suivant (3) :
    a) une interface de transmission de défaut (3.FAULT) reliée à un programme de traitement de défauts pour un élément de programme non encore défini ou qui n'est plus défini,
    b) une interface de liaison et un simulateur pour le raccordement d'un programme de simulateur pour un élément de programme devant être simulé,
    c) une interface d'interpréteur (3.INTER) de liaison à un programme d'interprétation pour un élément de programme devant être interprété,
    d) un cycle de programme compilé (3.FOO, 3.2PLUS, 3.PLUS) pour un élément de programme compilé.

4.  Procédé suivant la revendication 3, caractérisé par les éléments de programme d'un système Lisp.

5.  Procédé suivant la revendication 4, caractérisé par le fait
    qu'au moins l'une des entrées suivantes de données (10) est entrée dans la tête de liaison (1) de l'élément de programme :
    a) une entrée de données (10.1) en tant qu'entrée de caractérisation de la tête de liaison (1) possédant une indication de longueur de la tête de liaison (1),
    b) une entrée de données (10.2) en tant que chaînage pour l'entrée d'identification (2) d'un symbole, qui est associé à l'élément de programme,
    c) une entrée de données (10.3) en tant que chaînage au code d'exécution (3),
    d) une entrée de données (10.4) en tant que chaînage à un bloc d'environnement (4);
    e) une entrée de données (10.5) en tant que chaînage à une source de fonction (5),
    f) une entrée de données (10.6) en tant que chaînage à des paramètres (6),
    g) une entrée de données (10.7) en tant que chaînage à un symbole ou à une constante, qui est utilisé par l'élément de programme.

# FIG 1.0

```
"(FOO 3)
function FOO is undefined
"
```

910.0

900

## FIG 1.1

```
"(FOO 3)
function FOO is undefined
"(DEFUN FOO (X) (FIE X))
FOO
"(FOO 3)
function FIE is undefined
"(COMPILE 'FOO)
FOO
"(FOO 3)
function FIE is undefined
"
```

910.1

## FIG 1.2

```
"(DEFUN FIE (Y) (FEE Y))
FIE
"(DEFUN FEE (Z) (2+ Z))
FEE
"(DEFUN 2+ (X) (+ X 2))
2+
"(COMPILE '2+)
2+
"(FOO 3)
5
"
```

910.2

## FIG 2

2. FOO

"FOO"

2. FAULT

"FAULT"

3. FAULT

1. FAULT

| 10.1 |
| 10.2 |
| 10.3 |
| 10.4 |
| 10.5 |
| 10.6 |

## FIG 3.0

31

30.01:
EINGABE "(FOO 3)" INTERPRETIEREN, UND "FOO"
AUFRUFEN

32

30.02:
FEHLERMELDUNG
"function FOO is undefined"

115

# FIG 3.1  (31)

**30.10:**
EINGEGEBENEN PARAMETER ZUR PARAMETER-
UEBERGABE AUFBEREITEN

**30.11:**
ZUGRIFF AUF DEN IDENTIFIZIERUNGSEINTRAG DES
EINGEGEBENEN SYMBOLS ZUR AUFFINDUNG
DES BINDUNGSKOPFES

**30.12:**
ZUGRIFF AUF DEN BINDUNGSKOPF ZUR
AUFFINDUNG DES ABLAUFCODES

**30.13:**
ABLAUFUEBERGANG ZUM ABLAUFCODE

(32)

# FIG 3.2  (32)

**30.20:**
AUFGERUFENES SYMBOL IN DEN FEHLERTEXT
SCHREIBEN

**30.21:**
TEXTAUSGABE VORBEREITEN

**30.22:**
ABLAUFUEBERGANG IN DAS EIN / AUSGABESYSTEM

(115)

FIG 4.1

FIG 4.2

# FIG 5.0   (51)

**50.01:**
EINGABE INTERPRETIEREN, UND "FOO" AUFRUFEN

(52)

**50.02:**
FUNKTION "FOO" INTERPRETIEREN, UND "FIE" AUFRUFEN

(53)

**50.03:**
FEHLERMELDUNG
"function FIE is undefined"

(115)

# FIG 5.1   (52)

**50.20:**
VERWEIS AUF DAS QUELLENPROGRAMM AUF DEN
STACK BRINGEN

**50.21:**
ARGUMENTE AUF DEN STACK BRINGEN

**50.22:**
ABLAUFUEBERGANG ZUM INTERPRETER

(110)

# FIG 6

# FIG 7

(71)

---

**70.01:**
EINGABE INTERPRETIEREN, UND "FOO" AUFRUFEN

---

(72)

---

**70.02:**
FUNKTION "FOO" BEARBEITEN, UND "FIE" AUFRUFEN

---

(73)

---

**70.03:**
FEHLERMELDUNG
"function FIE is undefined"

---

(115)

FIG 8.1

1. FOO

| |
|---|
| 10.1 |
| 10.2 |
| 10.3 |
| 10.4 |
| 10.5 |
| 10.6 |
| 10.7 |
| "FIE" |

2. FOO

"FOO"

3. FOO"

1. FIE

| |
|---|
| 10.1 |
| 10.2 |
| 10.3 |
| 10.4 |
| 10.5 |
| 10.6 |

2. FIE

"FIE"

3. INTER

5. FIE

"(LAMBDA (Y)
(FEE  Y))"

FIG 8.2

1. FEE

| |
|---|
| 10.1 |
| 10.2 |
| 10.3 |
| 10.4 |
| 10.5 |
| 10.6 |

2. FEE

"FEE"

3. INTER

5. FEE

"(LAMBDA (Z)
(2·   Z))"

# FIG 8.3

# FIG 9